# EUROPEAN PATENT SPECIFICATION

(11) **EP 1 410 982 B1**
(45) Date of publication and mention of the grant of the patent: **07.05.2008**
(21) Application number: 02023393.8
(22) Date of filing: 18.10.2002
(51) Int. Cl.: B62J 39/00, B62J 6/00

(54) **Bicycle lighting equipment**
Fahrradlichtanlage
Installation d'éclairage pour bicyclette

(43) Date of publication of application: 21.04.2004
(73) Proprietor: SHIMANO INC., Osaka 590-8577 (JP)
(72) Inventor: Takeda, Kazuhiro, 599-8272 Osaka (JP)
(74) Representative: Hofmann, Harald

(56) References cited:
- EP-A- 0 904 982
- DE-A- 4 337 456
- DE-U- 20 115 816
- DE-U- 20 115 825
- US-A- 5 690 410

## Description

The present invention is related in general to bicycle equipment. Besides the usual bicycle parts such as wheels, the frame, the seat and the handle bar it has become usual practice to further provide additional bicycle equipment such as a cycle computer having a display and light emitting means for improving the visibility of the bicycle and in order to illuminate the surroundings when cycling at night.

Cycle computers as well as lighting devices are usually provided as independent add-on features. With respect to lighting devices it has become very common to use battery powered devices that the cyclists can optionally charge at homes Cycle computers are usually provided with removable fixation means on the handle bar of the bicycle. The cycle computer is usually designed for gathering and displaying information related to bicycle speed, cadence, distance travelled, and the like. Usually, there is provided a magnet mounted to a wheel spoke or to other revolving elements in order to allow a correspondingly mounted magnet sensor to sense the passing of the magnet. The resulting pulse can be used to calculate the different parameters in order to display such results to the cyclist. Usually such a cycle computer is battery powered and is not provided for any interaction with other elements or equipment material on the bicycle. In the latest developments (internal state of the art), however, cycle computers have been designed as more sophisticated systems having the ability to also display information related to the state of the bicycle transmission. An example is described in DE 20115825.

A further part of the bicycle equipment that is usually provided for independently is a lighting device that comprises light emitting means. In former times the lighting device usually was powered by a dynamo that was rotated by engagement with the rubber part of one of the bicycle wheels. A major problem with dynamo powered lighting devices is that the provided safety for the cyclist is insufficient as the light intensity is directly proportional to the cycling speed, i.e. once the cyclist stops, there is no illumination. In DE 433 74 56, a light emitting means for a bicycle is described, being controlled by electronics means, both coupled to each other and connectable to a common generator, two modes are provided, a dynamo mode when the rider is cycling at sufficient speed, and an accu-mode when the speed is below a predetermined level.

whence, most recent lighting devices are also battery powered and are usually removably mounted to either the bicycle or even to the cyclist in order to prevent it from being stolen. One of the problems of such lighting devices is that if the cyclist fails to thoroughly charge the battery, the function thereof may be affected. Furthermore, the duration with which illumination can be provided is heavily restricted.

From German utility model DE 20115816, a cellular phone is known having an integrated cycle computer with a display and light emitting means. The above device is also battery powered and accordingly, the availability of the cycle computer function, the illumination function and/or the cellular phone function is heavily restricted. Furthermore, it has to be considered that the disclosed device is nothing more than a mechanical combination of three independent devices in a common casing without providing any functional coupling or interaction between the different devices with the exception of the keyboard that may be used both for the cellular phone and for switching the light emitting means off and on.

Hence, there is a need for an improved bicycle equipment that provides for an enhanced functionality without resulting in increased costs.

Accordingly, it is an object of the present invention to provide such bicycle equipment.

The above object is solved by a bicycle equipment having the features of claim 1. Preferred embodiments are defined in the dependent sub-claims.

In particular, the invention relates to a bicycle equipment comprising a cycle computer with a display and light emitting means in which said cycle computer and said light emitting means are coupled to each other and connectable to a common bicycle mounted generator such that both are controlled and/or jointly powered. In other words it is surprisingly possible to reduce a number of parts to simplify wiring and to provide for optional functional interaction between said cycle computer and said light emitting means due to the connection to a common bicycle mounted generator. The power supply and the recharging of any battery can be improved, wherein an important aspect is that the power consumption of the cycle computer is usually high at high cycling speed whereas the power need of the light emitting means is usually inversely proportional to the cycling speed. Thus, the common bicycle mounted generator can be designed smaller and the provided energy can be used in a most efficient way.

Said generator simultaneously provides for power supply and control signals, in particular for pulsed control signals. The joint use of the generator as a source for energy and signals allows for a further reduction of parts and wiring.

The light emitting means can provide for varying illumination modes such as on, flashing, partly flashing, full or partly flashing with different flashing intervals or patterns, and others, the different illumination modes being each provided for a specific state of the bicycle as provided directly by the cycle computer.

According to a preferred embodiment said light emitting means are controlled by a CPU being comprised in said cycle computer. By providing a coupling between the cycle computer and the light emitting means via the CPU, signals related to the cycling conditions can easily be used to provide for adequate illumination in order to enhance the security for the cyclist. For instance it is possible to provide for a flashing illumination mode when the bicycle is running at low or no speed such that sufficient illumination is provided for the cyclist wherein the cyclist is more easily detectable by others. Of course, it is possible to design the CPU of the cycle computer such that additional functions inherent to the light emitting means can be provided efficiently. In this context it is also to be noted that the CPU of the cycle computer also allows for an improved battery management which by itself can already be regarded as a strong advance in technology with respect to known bicycle equipment.

Due to the fact that only one generator can be provided for powering said cycle computer and said light emitting means allows a small sized generator which can easily be provided as a hub dynamo. The use of a hub dynamo is particularly preferable due to the fact that such a generator is less affected by mud and moisture than other conventional dynamos

In a preferred embodiment of the bicycle equipment according to the present invention said light emitting means are at least partly provided with said cycle computer unitarily. As the usual position of a cycle computer is usually mounted on the handle bar of the bicycle in order to allow easy viewing of the display the front and side areas provide for space efficient housing of elements of the light emitting means. In case of a releasable fixation of a cycle computer there is also given the option of using said part of the bicycle equipment as a torch.

The functional coupling between said cycle computer and said light emitting means may also comprise an optical coupling such that the light emitting means can back light said display. The optical coupling may be provided with a simple arrangement close to each other or by optical fibres or the like. The joint use of the light emitting means for illumination purpose and for back lighting the display allows for further reduction of costs and parts.

It is important to note in this respect that back lighting of the display is usually only required when the light emitting means are actually emitting light, i.e. when visibility is reduced such as in darkness.

According to a further embodiment said light emitting means are at least partly provided remote from said cycle computer, in particular on a separate battery housing. By providing at least partly said light emitting means remote from the cycle computer the safety from the cyclist can be further enhanced, as the light emitting means are not restricted to any front light but allow also for signalling in the rearward direction of the bicycle. The optional provision of a part of said light emitting means on said separate battery housing allows for easier use of the battery housing as a torch in case said battery housing in releasable fixed to a bicycle.

Although the light emitting means may comprise conventional light bulbs it is to be considered as preferred that the light emitting means comprise a plurality of light emitting elements, in particular LED's, that can at least partly be powered and controlled independently with respect to each other by means of said common generator and/or by said cycle computer. The use of a plurality of light emitting elements allows for an even better efficiency with respect to the available energy and it is possible to provide for more versatile applications. I.e. it is possible to provide for a first light emitting element that is shown to illuminate the near surroundings of the bicycle and another light emitting element for illumination an area at greater distance. In such an application it could be possible to illuminate the near surroundings upon small cycling speed or when the bicycle is stopped and to provide for remote illumination upon cycling at relatively high speed. In this application it is also of benefit that the elements of said light emitting means that are provided for distant illumination can be designed with a high power consumption as upon cycling at high speed usually the available energy from the generator is high.

Finally, it is preferred that the bicycle equipment according to the present invention also comprises at least an ambient light sensor in order to allow for automatic activation of the light emitting means in case illumination is indicated by low ambient light. Of course, in such case it should be provided for a manual switching means allowing to overrule the illumination mode as provided by the ambient light sensor, the CPU of the cycle computer or the cycle computer in general.

In summary, it is to be noted that the present invention provides for reduced parts and costs of a bicycle equipment and that with an increased functionality. The bicycle equipment according to the present invention can highly improve the security of the cyclist and provides for most efficient use of the available energy generated by manpower.

Thus, the bicycle equipment according to the present invention brings tremendous benefit for the cyclist without increasing parts, costs or required manpower for cycling and with no further need of caring about the loading condition of several battery packs for the cycle computer and the light emitting means as it was necessary according to the prior art.

Further characteristics and benefits of the present invention will become apparent upon reading the following detailed description of actually preferred embodiments; said detailed de, scription is merely intended as illustrative and is in any case not to be regarded as limiting the scope of protection as it is defined in the appending claims. In the detailed description of preferred embodiment reference is given to the appending drawings, in which:
Fig. 1 shows a cycle computer with an integrated lamp as light emitting means as part of a preferred embodiment of the bicycle equipment according to the present invention.
Fig. 2 shows an alternative to the cycle computer portion of fig. 1 with the use of LED's.
Fig. 3 shows the application of a cycle computer as illustrated in fig. 1 or fig. 2 mounted on the handle bar of a bicycle.
Fig. 4 shows a bicycle with a bicycle equipment according to a preferred embodiment of the invention mounted thereon.
Fig. 5 shows an alternative embodiment of the bicycle equipment according to the present invention mounted on a bicycle in a view similar in fig. 4.
Fig. 6 shows a further alternative embodiment of a bicycle equipment according the present invention also mounted onto a bicycle.
Fig. 7 shows a schematic view of different elements of a bicycle equipment according to the present invention together with some elements of the bicycle to which the equipment is intended to be mounted.
Fig. 8 shows a modified embodiment in a view similar to fig. 7.

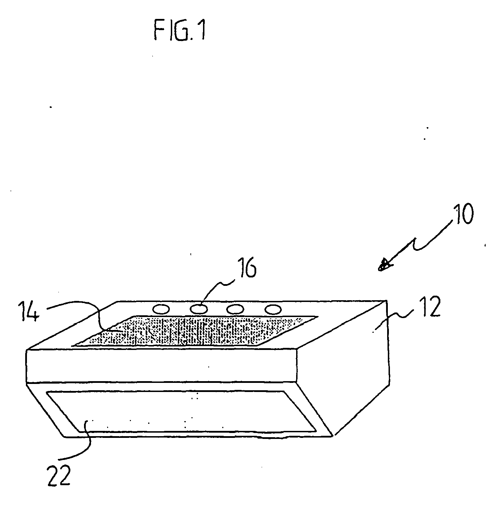

In fig. 1 a cycle computer 10 is shown having integrated light emitting means 22. The cycle computer 10 comprises a housing 12 with a display 14 on the upper surface and switch elements 16. The front portion of the housing 12 comprises a biased or tilted portion in which a light 22 for lighting the road is included. In the shown embodiment the light emitting means 22 are formed by a light bulb that cannot be seen in the illustration of fig. 1 as it is masked by a translucent window element. In the shown embodiment it is possible to position the bulb of the light emitting means 22 such that light is also directed in the upward direction in order to allow back lighting of the display 14.

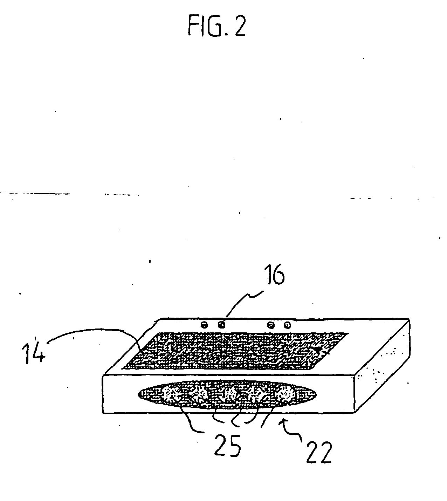

In fig. 2 there is shown a similar device to the one of fig. 1, wherein, however, the light emitting means 22 consist of five light emitting diodes or LED's 25. Furthermore, the LED's are positioned on a forwardly directed front face instead of being positioned on a biased or tilted portion. The embodiment shown in fig. 2 allows for multiple illumination modes as will be detailed later in this description.

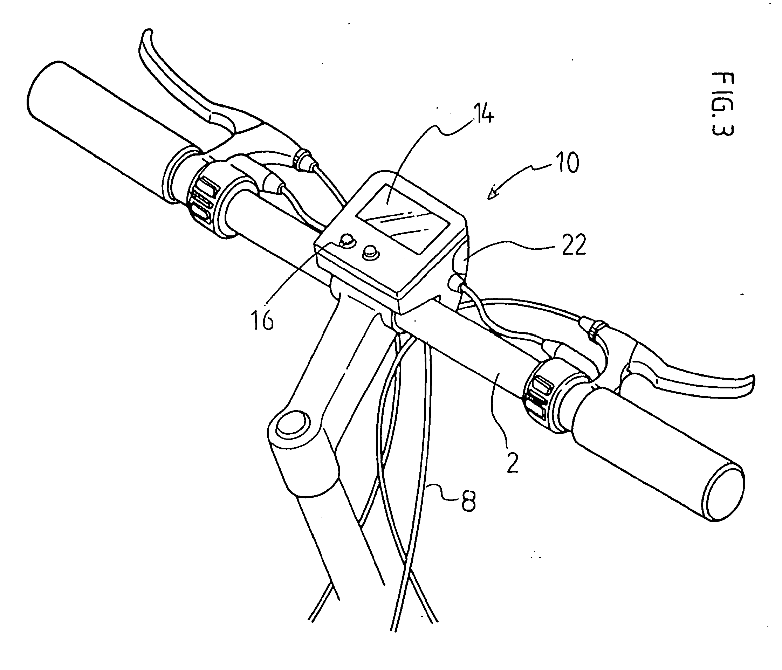

Fig. 3 shows a possible mounting of a device as shown in figures 1 or 2 onto the handle bar 2 of a bicycle. Here once again the display 14 of the cycle computer is directed towards the cyclist together with switching means 16 in order to operate the cycling computer and/or the light emitting means. The light emitting means 22 are directed towards a forward direction and extend in the shown embodiment also onto the side surfaces of the cycle computer housing 12 in order to allow both illumination of the ahead road as well as to allow signalling of the bicycle sideways in order to improve the security for the cyclist. As illustrated the light emitting means 22 and the cycle computer with its display 14 are housed in a common housing and are functionally coupled to each other and are connectable to a bicycle mounted generator via a cable indicated with the reference sign 8.

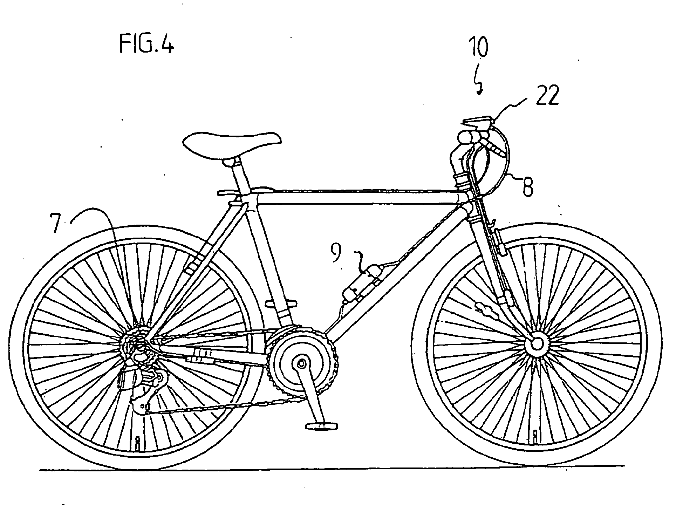

In fig. 4 a bicycle is shown to illustrate in greater detail a possible application of the present invention. As in fig. 3 a cycle computer 10 having integrated light emitting means 22 that are coupled with respect to the cycling computer are mounted on the handle bar of the bicycle. As illustrated the cyclist interface device having the light illumination means included is connectable to a wiring 8 that leads to a battery housing 9 that is fixed to the frame member of the bicycle. The battery housing 9 is connected with a hub dynamo 7 serving as power generating means. In the shown embodiment the hub dynamo can provide for signals that are necessary for the cycle computer to calculate cycling parameters such as bicycle speed, distance etc. and eventually a necessary illumination mode. It is to be noted that the cycling computer 10 is also managing the charge status of the battery comprised said housing 9.

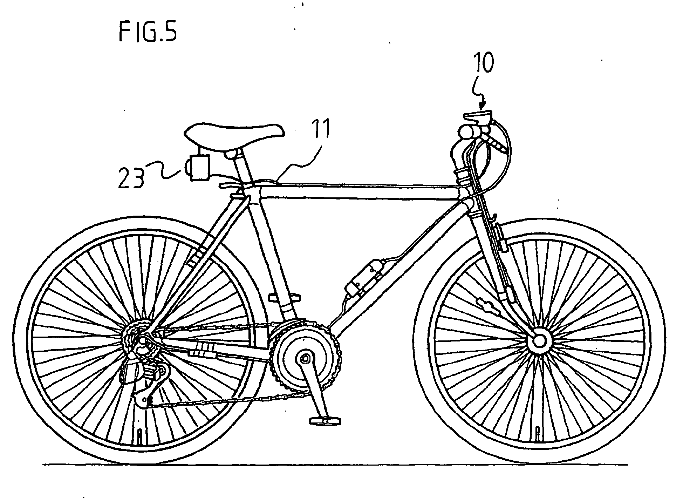

In fig. 5 a modified embodiment of the bicycle equipment according to the present invention is shown. In the shown embodiment additional or alternative light emitting means are provided for signalling purpose in order to indicate the presence of the bicycle when viewed from behind. The light emitting means is connected with the cycle computer device 10 via a wiring 11. Here again, the housing 12 of the cycle computer unit serves as central control unit by using the CPU of the cycle computer for both controlling cycle computer function as well as the illumination and the charge control of the battery that may be included in the housing 9 and/or the housing in which said illumination means 23 is comprised.

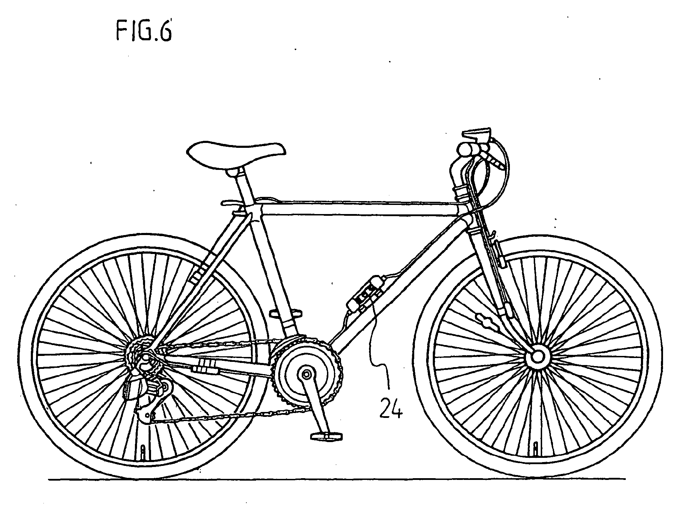

Fig. 6 illustrates a further bicycle equipped with the bicycle equipment according to the present invention. In the shown embodiment the battery housing 9 is also comprised of light emitting means 24 allowing for enhanced visibility of the bicycle when viewed from sideways. The other elements are substantially corresponding to the previous embodiments so that we refrain from any repetition thereof.

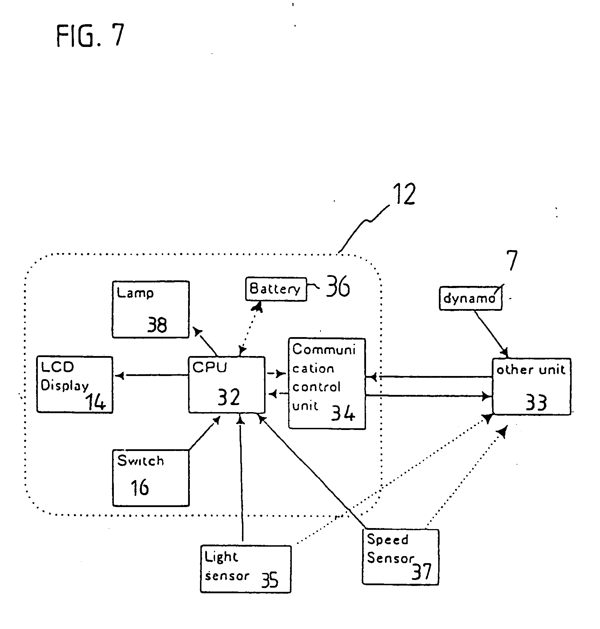

In fig. 7 a conceptional illustration of a preferred embodiment of the present invention is shown. As illustrated a housing 12 may comprise a central processing unit CPU to which the different other elements are coupled. Namely, the CPU is coupled with a battery 36 for power supply that can be housed within the housing 12 or in a separate housing, such as the battery housing as illustrated in the previous embodiment. In order to perform the cycle computer function the CPU 32 is also connected to signal generation means such as the speed sensor 32 or the dynamo 7 which by means of an additional or other unit 33 and a communication control unit 34 may provide corresponding signals to the CPU which in turn provides calculation in order to output data relating to the cycle status to the liquid crystal display 14. As to the illumination function the CPU 32 is connected to light emitting means 38 in the form of a simple lamp in this embodiment. The lamp 38 can be controlled by the CPU 32 in response to switching signals provided by the switch 16 or in response to signals of a light sensor 35 which detects the ambient light level. For controlling the light emitting means 38 additional data as displayed on the LCD display 14 or as provided by the different signal generating means may also be used as well as signals provided from the battery with respect to the charge status or with respect to the available power provided by the dynamo.

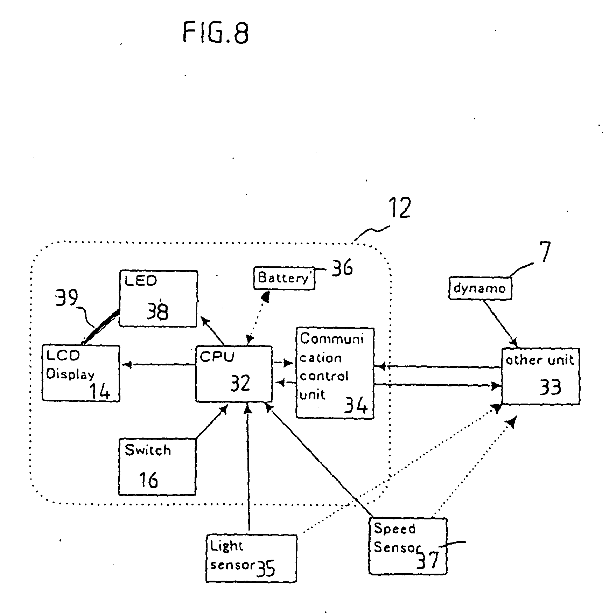

Finally, in fig. 8 there is shown in an illustration similar to fig. 7 a further preferred embodiment in which the light emitting means 38 is provided by several LED elements. In order to allow back lighting of the LCD display 14 an optical coupling is provided between the LED 38 and the display 14, e.g. in form of optical fibres.

The advantages of the present invention become more obvious when considering some possible operational modes as will be detailed in the following, again to be considered as an example only and as not restricting the scope of protection.

By coupling the cycling computer and the light emitting means and by providing means for connecting them to a bicycle mounted common generator it is allowed for most versatile operation modes with improved power efficiency. Considering the bicycle is operated at high speed the power generator, e.g. in the form of a hub dynamo provides for a high amount of available power. The common CPU may in such case provide for storage of a part of said power into the battery and may calculate on the basis of light sensor signals and the detected speed and may control the display of the cycle computer in order to indicate to the cyclist relevant information about the riding such as the actual speed and may at the same time provide for supplying the light emitting means, e.g. in the form of several LED's with high power in order to illuminate a large area ahead of the bicycle. Supposing now that the cycling speed decreases the required area ahead of the bicycle that is to be illuminated may be smaller and accordingly the CPU may adjust the luminous intensity of the light emitting means correspondingly to a lower available level of generated energy. Alternatively it would also be possible that the brightness of the light emitting means may be partly maintained and party reduced or even partly switched off.

Considering now that the bicycle comes to a stop the cycling computer itself hardly needs any power supply and accordingly the CPU may control the light emitting means based on the available stored energy out of the battery. In order to make the bicycle well visible it is for instance possible to switch the light emitting means to a flashing mode, for instance random flashing of the different elements, common flashing etc.. By doing so the power consumption can be further reduced in response to the detective status of the bicycle, i.e. that the bicycle is stopped.

In all of the above it is to be considered that the present invention provides for a bicycle equipment with reduced costs and enhanced functionality. In case the battery is included in cycle computer housing the same could also be used as a releasable torch. Such option is also available in case of the embodiment as shown in fig. 6 provided that the battery housing 9 is provided releasably to the bicycle frame.

## Claims

1. Bicycle equipment comprising :
- a cycle computer (10) with a display (14); and
- light emitting means (22, 23, 24)
wherein
said cycle computer (10) and said light emitting means (22) are coupled with each other and connectable to a common bicycle mounted generator (7) such that both are controlled and/or powered jointly,
said generator (7) simultaneously provides for power supply and control signals, in particular pulsed control signals, and
said light emitting means (22, 23, 24) can provide for varying illumination modes, **characterised in that** the illumination modes comprise at least flashing, partly flashing, full or partly flashing with different flashing intervals or patterns, the illumination modes being each provided for a specific state of the bicycle as provided by the cycle computer (10).

2. Bicycle equipment according to claim 1, **characterised in that** said light emitting means (22, 23, 24) is controlled by a CPU (32) being comprised in said cycle computer (10).

3. Bicycle equipment according to any of claims 1 to 2, **characterised in that** said common generator (7) is a hub dynamo.

4. Bicycle equipment according to any of claims 1 to 3, **characterised in that** said light emitting means (22, 23, 24) is at least partly provided unitarily with said cycle computer (10).

5. Bicycle equipment according to any of claims 1 to 4, **characterised in that** said coupling comprises optical coupling (39) such that the light emitting means can back light said display (14).

6. Bicycle equipment according to any of claims 1 to 5 **characterised in that** said light emitting means (22, 23, 24) are at least partly provided remote from said cycle computer (10), in particular on a separate battery housing (9).

7. Bicycle equipment according to any of claims 1 to 6, **characterised in that** said light emitting means (22, 23, 24) comprise a plurality of light emitting elements, in particular LED's (25), that can at least partly be powered and/or controlled independently by means of said common generator and/or by said cycle computer.

8. Bicycle equipment according to any of claims 1 to 7, **characterised in that** it comprises at least an ambient light sensor (35).

## Patentansprüche

1. Fahrradzubehör, umfassend:
- einen Fahrradcomputer (10) mit einer Anzeige (14); und
- eine lichtemittierende Einrichtung (22, 23, 24)
bei welchem
der Fahrradcomputer (10) und die lichtemittierende Einrichtung (22) miteinander gekoppelt sind und verbindbar bzgl. eines gemeinsamen am Fahrrad montierten Generators (7), so dass beide gemeinsam gesteuert und/oder versorgt sind,
wobei der Generator (7) gleichzeitig eine Stromzufuhr und Steuersignale, insbesondere gepulste Steuersignale bereitstellt, und wobei die lichtemittierende Einrichtung (22, 23, 24) variable Beleuchtungsmodi bereitstellen kann, **dadurch gekennzeichnet, dass** die Beleuchtungsmodi zumindest umfassen Blinken, teilweises Blinken, vollständiges oder teilweises Blinken mit unterschiedlichen Blinkintervallen oder -mustern, wobei die Beleuchtungsmodi jeweils bereitgestellt sind für einen spezifischen Zustand des Fahrzeuges, wie vom Fahrradcomputer (10) bereitgestellt.

2. Fahrradzubehör nach Anspruch 1, **dadurch gekennzeichnet, dass** die lichtemittierende Einrichtung (22, 23, 24) durch eine CPU (32) gesteuert ist, enthalten in dem Fahrradcomputer (10).

3. Fahrradzubehör nach einem der Ansprüche 1 bis 2, **dadurch gekennzeichnet, dass** der gemeinsame Generator (7) ein Nabendynamo ist.

4. Fahrradzubehör nach einem der Ansprüche 1 bis 3, **dadurch gekennzeichnet, dass** die lichtemittierende Einrichtung (22, 23, 24) zumindest teilweise einstückig mit dem Fahrradcomputer (10) bereitgestellt ist.

5. Fahrradzubehör nach einem der Ansprüche 1 bis 4, **dadurch gekennzeichnet, dass** die Kopplung eine optische Kopplung (39) umfasst, so dass die lichtemittierende Einrichtung die Anzeige (14) hintergrundbeleuchten kann.

6. Fahrradzubehör nach einem der Ansprüche 1 bis 5, **dadurch gekennzeichnet, dass** die lichtemittierende Einrichtung (22, 23, 24) zumindest teilweise beabstandet von dem Fahrradcomputer (10) bereitgestellt ist, insbesondere an einem separaten Batteriegehäuse (9).

7. Fahrradzubehör nach einem der Ansprüche 1 bis 6, **dadurch gekennzeichnet, dass** die lichtemittierende Einrichtung (22, 23, 24) eine Vielzahl von lichtemittierenden Elementen umfasst, insbesondere LEDs (25), die zumindest teilweise unabhängig mittels des gemeinsamen Generators und/oder durch den Fahrradcomputer versorgt und/oder gesteuert werden können.

8. Fahrradzubehör nach einem der Ansprüche 1 bis 7, **dadurch gekennzeichnet, dass** es zumindest einen Umgebungslichtsensor (35) umfasst.

## Revendications

1. Equipement de bicyclette comprenant :
un ordinateur de vélo (10) avec un écran (14) et
des moyens d'émission de lumière (22, 23, 24)
dans lequel
l'ordinateur de vélo (10) et les moyens d'émission de lumière (22) sont couplés l'un l'autre et peuvent être reliés à un générateur commun (7) monté sur la bicyclette, de sorte que les deux soient commandés et/ou alimentés de manière commune, le générateur (7) fournissant simultanément une alimentation de puissance et des signaux de commande, en particulier des signaux de commande à impulsion, et
les moyens d'émission de lumière (22, 23, 24) peuvent fournir des modes d'illumination qui varient, **caractérisé en ce que** les modes d'illumination comprennent au moins des modes clignotant, partiellement clignotant, totalement ou clignotant en partie avec des intervalles ou des schémas de clignotement différents, les modes d'illumination étant chacun fournis pour un état spécifique de la bicyclette, comme fourni par l'ordinateur de vélo (10).

2. Equipement de bicyclette selon la revendication 1, **caractérisé en ce que** les moyens d'émission de lumière (22, 23, 24) sont contrôlés par une unité centrale CPU (32) étant comprise dans l'ordinateur de vélo (10).

3. Equipement de bicyclette selon l'une quelconque des revendications 1 à 2, **caractérisé en ce que** le générateur commun (7) est une dynamo de moyeu.

4. Equipement de bicyclette selon l'une quelconque des revendications 1 à 3, **caractérisé en ce que** les moyens d'émission de lumière (22, 23, 24) sont au moins en partie fournis de manière unitaire avec l'ordinateur de vélo (10).

5. Equipement de bicyclette selon l'une quelconque des revendications 1 à 4, **caractérisé en ce que** le couplage comprend un couplage optique (39) de sorte que les moyens d'émission de lumière peuvent rétro-éclairer l'écran (14).

6. Equipement de bicyclette selon l'une quelconque des revendications 1 à 5, **caractérisé en ce que** les moyens d'émission de lumière (22, 23, 24) sont au moins en partie fournis séparés de l'ordinateur de vélo (10), en particulier sur un boîtier de batterie séparé (9).

7. Equipement de bicyclette selon l'une quelconque des revendications 1 à 6, **caractérisé en ce que** les moyens d'émission de lumière (22, 23, 24) comprennent une pluralité d'éléments d'émission de lumière, en particulier des LEDs (25), qui peuvent être au moins en partie alimentés et/ou commandés indépendamment au moyen du générateur commun et/ou de l'ordinateur de vélo.

8. Equipement de bicyclette selon l'une quelconque des revendications 1 à 7, **caractérisé en ce qu'**il comprend au moins un capteur de lumière ambiante (35).
